(19) Europäisches Patentamt
European Patent Office
Office européen des brevets

(11) EP 2 206 739 A2

(12) **EUROPEAN PATENT APPLICATION**

(43) Date of publication:
**14.07.2010 Bulletin 2010/28**

(51) Int Cl.:
***C08K 5/151*** *(2006.01)*

(21) Application number: **10150212.8**

(22) Date of filing: **07.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.01.2009 JP 2009003735**
**28.04.2009 JP 2009108930**

(71) Applicant: **Sumitomo Chemical Company, Limited**
**Tokyo 104-8260 (JP)**

(72) Inventors:
- **Kimura, Yoshikazu**
  **Osaka-shi Osaka (JP)**
- **Shintaku, Tetsuya**
  **Sanda-shi Hyogo (JP)**

(74) Representative: **Vossius & Partner**
**Siebertstrasse 4**
**81675 München (DE)**

(54) **Polymer stabilizer**

(57) A polymer stabilizer comprising a compound of the formula (1):

$$C_nH_{2n+2}O_n \qquad (1)$$

(wherein n represents an integer of 4 or more).

EP 2 206 739 A2

## Description

### Technical Field

The present invention relates to a polymer stabilizer.

### Background Art

Various polymer stabilizers are used, for improving the processing stability of a polymer (for example, non-patent document 1).

(non-patent document 1 )

Seiichi Homma, 1. Kiso Sogo Kaisetsuhen, Genba de Yakudatsu Seikei Kako Gijutsu - Zairyo to Seikei Gijutsu, PLASTIC, 2002 April edition, additional volume p. 4, published by Kogyo Chosaka Publishing, Inc.

### Summary of the Invention

Recently, a novel polymer stabilizer even more excellent in processing stability is desired.

Under such conditions, the present inventors have completed the following inventions [1] to [5].

[1] A polymer stabilizer comprising a compound of the formula (1):

$$C_nH_{2n}+_2O_n \qquad (1)$$

(wherein n represents an integer of 4 or more).

[2] The polymer stabilizer according to [1], wherein the compound of the formula (1) is a sugar alcohol having 6 carbon atoms.

[3] A polymer composition comprising the polymer stabilizer as described in [1] or [2] and a polymer.

[4] The polymer composition according to [3], wherein the polymer is at least one butadiene polymer selected from the group consisting of a styrene-butadiene rubber, styrene-butadiene-styrene copolymer, styrene-butadiene block copolymer, acrylonitrile-butadiene copolymer, acrylonitrile-butadiene-styrene copolymer and polybutadiene.

[5] Use of a compound of the formula (1) as a polymer stabilizer:

$$C_nH_{2n}+_2O_n \qquad (1)$$

(wherein n represents an integer of 4 or more).

### Modes for Carrying Out the Invention

The present invention will be described in detail below.

The polymer stabilizer of the present invention comprises a compound of the formula (1) :

$$C_nH_{2n}+_2O_n \qquad (1)$$

(hereinafter described as compound (1) in some cases).

In the compound (1), n represents an integer of 4 or more, preferably 5 to 8, more preferably 6.

Examples of the compound (1) include sugar alcohols having 4 or more carbon atoms such as erythritol, threitol, arabinitol, xylitol, adonitol, allitol, iditol, galactitol, sorbitol, talitol, mannitol, dulcitol, volemitol, perseitol, octitol, and the like.

The compound (1) may be an optically active substance such as D compound, L compound and the like, or an optically inactive substance such as a DL compound and the like.

In particular, preferable as the compound (1) are sugar alcohols having 6 carbon atoms such as allitol, iditol, galactitol, sorbitol, talitol, mannitol and the like represented as illustrated below according to the Fisher projection formulae.

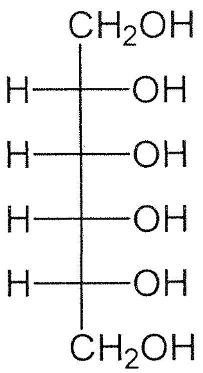

allitol

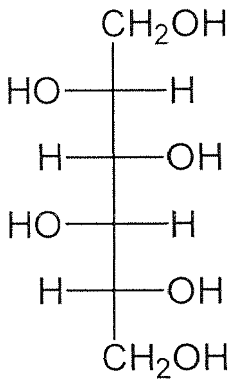

iditol

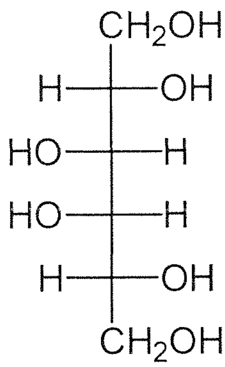

galactitol

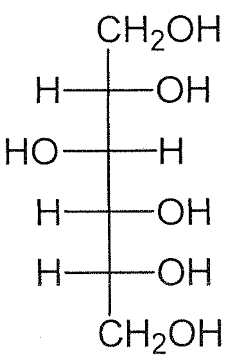

sorbitol

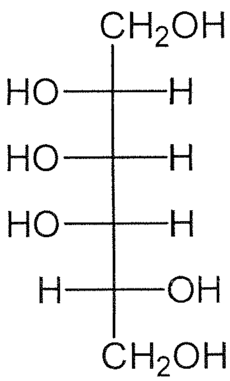

talitol

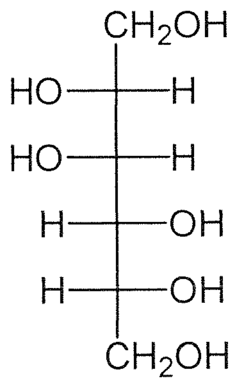

mannitol

As the compound (1), for example, commercially available sugar alcohols having 4 or more carbon atoms can be used.

The polymer stabilizer of the present invention may be an agent composed only of the compound (1), however, it may also be a blend of the compound (1) and additives such as an antioxidant like a phenol antioxidant, phosphorus antioxidant, sulfur antioxidant and the like; an ultraviolet absorber, photostabilizer, metal deactivator, nucleating agent, lubricant, antistatic agent, flame retardant, filler, pigment, plasticizer, anti-blocking agent, surfactant, foaming agent, emulsifier, gloss agent, neutralizing agent, binder and the like.

Examples of the phenol antioxidant include alkylated monophenols such as pentaerythritoltetrakis[3-(3,5-di-t-butyl-4-hydroxyphenyl) propionate], n-octadecyl-β-(4'hydroxy-3',5'-di-t-butylphenyl) propionate, 3,9-bis[1,1-dimethyl-2-[β-(3-t-butyl-4-hydroxy-5-methylphenyl)propionyloxy]ethyl]-2,4,8,10-tetraoxaspiro[5,5]-undecane, 2-[1-(2-hydroxy-3,5-di-t-pentylphenyl)ethyl]-4,6-di-t-pentylphenyl acrylate, 2-t-butyl-6-(3-t-butyl-2-hydroxy-5-methylbenzyl)-4-methylphenyl acrylate, 2,6-di-t-butyl-4-methylphenol, 2,4,6-tri-t-butylphenol, 2,6-di-t-butylphenol, 2-t-butyl-4,6-dimethylphenol, 2,6-di-t-butyl-4-ethylphenol, 2,6-di-t-butyl-4-n-butylphenol, 2,6-di-t-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-t-butyl-4-methoxymethylphenol, 2,6-dinonyl-4-methylphenol, 2,4-dimethyl-6-(1'-methylundecyl-1'-yl)phenol, 2,4-dimethyl-6-(1'-methylheptadecyl-1'-yl)phenol, 2,4-dimethyl-6-(1'-methyltridecyl-1'-yl)phenol and mixtures thereof and the like,

alkylthiomethylphenols such as 2,4-dioctylthiomethyl-6-t-butylphenol, 2,4-dioctylthiomethyl-6-ethylphenol, 2,6-didodecylthiomethyl-4-nonylphenol and mixtures thereof and the like,

hydroquinones and alkylated hydroquinones such as 2,6-di-t-butyl-4-methoxyphenol, 2,5-di-t-butylhydroquinone, 2,5-di-t-amylhydroquinone, 2,6-diphenyl-4-octadecyloxyphenol, 2,6-di-t butylhydroquinone, 2,5-di-t-butyl-4-hydroxyanisole, 3,5-di-t-butyl-4-hydroxyphenyl stearate, bis(3,5-di-t-butyl-4-hydroxyphenyl) adipate and mixtures thereof and the like,

tocopherols such as α-tocopherol, β-tocopherol, γ-tocopherol, δ-tocopherol and mixtures thereof and the like,

hydroxylated thiodiphenyl ethers such as 2,2'-thiobis(6-t-butylphenol), 2,2'-thiobis(4-methyl-6-t-butylphenol), 2,2'-thiobis(4-octylphenol), 4,4'-thiobis(3-methyl-6-t-butylphenol), 4,4'-thiobis(2-methyl-6-t-butylphenol), 4,4'-thiobis(3,6-dit-amylphenol), 4,4'-(2,6-dimethyl-4-hydroxyphenyl) disulfide and the like,

alkylidenebisphenols such as 2,2'-methylenebis(4-methyl-6-t-butylphenol), 2,2'-methylenebis(4-ethyl-6-t-butylphenol), 2,2'-methylenebis[4-methyl-6-(α-methylcyclohexyl)phenol)], 2,2'-methylenebis(4-methyl-6-cyclohexylphenol), 2,2'-methylenebis(4-methyl-6-nonylphenol), 2,2'-methylenebis(4,6-di-t-butylphenol), 2,2'-ethylidenebis(4,6-di-t-butylphenol), 2,2'-ethylidenebis(4-isobutyl-6-t-butylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(6-t-butyl-2-methylphenol), 4,4'-methylenebis(2,6-di-t-butylphenol), 4,4'-butylidenebis(3-methyl-6-t-butylphenol), 1,1-bis(4-hydroxyphenyl)cyclohexane, 1,1-bis(5-t-butyl-4-hydroxy-2-methylphenyl)butane, 2,6-bis(3-t-butyl-5-methyl-2-hydroxybenzyl)-4-methylphenol, 1,1,3-tris(5-t-butyl-4-hydroxy-2-methylphenyl)butane, 1,1-bis(5-t-butyl-4-hvdroxy-2-methylphenyl)-3-n-dodecylmercaptobutane, ethylene glycol bis[3,3-bis-3'-t-butyl-4'-hydroxyphenyl) butyrate], bis(3-t-butyl-4-hydroxy-5-methylphenyl)dicyclopentadiene, bis[2-(3'-t-butyl-2'-hydroxy-5'-methylbenzyl)-6-t-butyl-4-methylphenyl] terephthalate, 1,1-bis(3,5-dimethyl-2-hydroxyphenyl)butane, 2,2-bis(3,5-di-t-butyl-4-hydroxyphenyl)propane, 2,2-bis(5-t-butyl-4-hydroxy-2-methylphenyl)-4-n-dodecylmercaptobutane, 1,1,5,5-tetra(5-t-butyl-4-hydroxy-2-methylphenyl)pentane and mixtures thereof and the like, and derivatives thereof,

O-benzyl derivatives, N-benzyl derivatives and S-benzyl derivatives such as 3,5,3',5'-tetra-t-butyl-4,4'-dihydroxy-dibenzyl ether, octadecyl-4-hydroxy-3,5-dimethylbenzyl mercaptoacetate, tris(3,5-di-t-butyl-4-hydroxybenzyl) amine, bis(4-t-butyl-3-hydroxy-2,6-dimethylbenzyl)dithio terephthalate, bis(3,5-di-t-butyl-4-hydroxybenzyl) sulfide, isooctyl-3,5-di-t-butyl-4-hydroxybenzyl mercaptoacetate and mixtures thereof and the like,

hydroxybenzylated malonate derivatives such as dioctadecyl-2,2-bis(3,5-di-t-butyl-2-hydroxybenzyl) malonate, dioctadecyl-2-(3-t-butyl-4-hydroxy-5-methylbenzyl) malonate, didodecylmercaptoethyl-2,2-bis(3,5-di-t-butyl-4-hydroxybenzyl) malonate, bis[4-(1,1,3,3-tetramethylbutyl)phenyl]-2,2-bis(3,5-di-t-butyl-4-hydroxybenzyl) malonate and mixtures thereof and the like,

aromatic hydroxybenzyl derivatives such as 1,3,5-trimethyl-2,4,6-tris(3,5-di-t-butyl-4-hydroxybenzyl)benzene, 1,4-bis(3,5-di-t-butyl-4-hydroxybenzyl)-2,3,5,6-tetramethylbenzene, 2,4,6-tris(3,5-t-butyl-4-hydroxybenzyl)phenol and mixtures thereof and the like,

triazine derivatives such as 2,4-bis(n-octylthio)-6-(4-hydroxy-3,5-di-t-butylanilino)-1,3,5-triazine, 2-n-octylthio-4,6-bis(4-hydroxy-3,5-di-t-butylanilino)-1,3,5-triazine, 2-n-octylthio-4,6-bis(4-hydroxy-3,5-di-t-butylphenoxy)-1,3,5-triazine, 2,4,6-tris(3,5-di-t-butyl-4-phenoxy)-1,3,5-triazine, tris(4-t-butyl-3-hydroxy-2,6-dimethylbenzyl) isocyanurate, tris(3,5-di-t-butyl-4-hydroxybenzyl) isocyanurate, 2,4,6-tris(3,5-di-t-butyl-4-hydroxyphenylethyl)-1,3,5-triazine, 2,4,6-tris(3,5-di-t-butyl-4-hydroxyphenylpropyl)-1,3,5-triazine, tris(3,5-dicyclohexyl-4-hydroxybenzyl) isocyanurate, tris[2-(3',5'-di-t-butyl-4'-hydroxycinnamoyloxy)ethyl] isocyanurate and mixtures thereof and the like,

benzyl phosphonate derivatives such as dimethyl-3,5-di-t-butyl-4-hydroxybenzyl phosphonate, diethyl-3,5-di-t-butyl-4-hydroxybenzyl phosphonate, dioctadecyl-3,5-di-t-butyl-4-hydroxybenzyl phosphonate, dioctadecyl-5-t-butyl-4-hydroxy-3-methylbenzyl phosphonate, calcium salt of 3,5-di-t-butyl-4-hydroxybenzyl monophosphonate and mixtures thereof and the like,

acylaminophenol derivatives such as 4-hydroxylauric acid anilide, 4-hydroxystearic acid anilide, octyl-N-(3,5-di-t-butyl-4-hydroxyphenyl) carbamate and mixtures thereof and the like,

esters of β-(3,5-di-t-butyl-4-hydroxyphenyl)propionic acid with a monohydric alcohol or polyhydric alcohol such as methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiro glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane and mixtures thereof and the like,

esters of β-(3,5-dicyclohexyl-4-hydroxyphenyl)propionic acid with a monohydric alcohol or polyhydric alcohol such as methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiro glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane and mixtures thereof and the like,

esters of 3,5-di-t-butyl-4-hydroxyphenylacetic acid with a monohydric alcohol or polyhydric alcohol such as methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiro glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane and mixtures thereof and the like,

amides of β-(3,5-di-t-butyl-4-hydroxyphenyl)propionic acid such as N,N'-bis[3-(3',5'-di-t-butyl-4'-hydroxyphenyl)propionyl]hydrazine, N,N'-bis[3-(3',5'-di-t-butyl-4'-hydroxyphenyl)propionyl]hexamethylenediamine, N,N'-bis[3-(3',5'-di-t-butyl-4'-hydroxyphenyl)propionyl]trimethylenediamine and mixtures thereof, and the like.

Two or more different phenol antioxidants may be used in admixture.

Particularly preferably mentioned are pentaerythritoltetrakis[3-(3,5-di-t-butyl-4-hydroxyphenyl) propionate], n-octadecyl-β-(4'-hydroxy-3',5'-di-t-butylphenyl) propionate, 3,9-bis[1,1-dimethyl-2-[β-(3-t-butyl-4-hydroxy-5-methylphenyl)propionyloxy]ethyl]-2,4,8,10-tetraoxaspiro[5,5]-undecane, 2-[1-(2-hydroxy-3,5-di-t-pentylphenyl)ethyl]-4,6-di-t-pentylphenyl acrylate, 2-t-butyl-6-(3-t-butyl-2-hydroxy-5-methylbenzyl)-4-methylphenyl acrylate and the like.

Examples of the phosphorus antioxidant include triphenyl phosphite, tris(nonylphenyl) phosphite, tris(2,4-di-t-butylphenyl) phosphite, 6-[3-(3- t- butyl- 4- hydroxy- 5- methylphenyl) propoxy]- 2,4,6,8,10- tetra- t- butyldibenzo [d, f] [1.3.2] dioxaphosphepin, trilauryl phosphite, trioctadecyl phosphite, distearyl pentaerythritol diphosphite, diisodecyl pentaerythritol diphosphite, bis (2,4- di- t- butylphenyl) pentaerythritol diphosphite, bis (2,4- di- t- butyl- 6- methylphenyl) pentaerythritol diphosphite, bis (2,6- di- t- butyl- 4- methylphenyl) pentaerythritol diphosphite, bis (2,4,6- tri- t- butylphenyl) pentaerythritol diphosphite, tristearyl sorbitol triphosphite, tetrakis (2,4- di- t- butylphenyl)- 4,4'- diphenylene diphosphonite, 2,2'- methylenebis (4,6- di- t- butylphenyl) 2- ethylhexyl phosphite, 2,2'- ethylidenebis (4,6- di- t- butylphenyl) fluorophosphite, bis (2,4- di- t- butyl- 6- methyl- phenyl) ethylphosphite, bis (2,4- di- t- butyl- 6- methylphenyl) methylphosphite, 2-(2,4,6- tri- t- butylphenyl)- 5- ethyl- 5- butyl- 1,3,2- oxaphosphorinane, 2,2', 2''- nitrilo [triethyltris (3,3', 5,5'-tetra- t- butyl- 1,1'- biphenyl- 2,2'- diyl) phosphite and mixtures thereof and the like.

Two or more different phosphorus antioxidants may be used in admixture.

Particularly mentioned are tris(2,4-di-t-butylphenyl) phosphite, 6-[3-(3-t-butyl-4-hydroxy-5-methyl-phenyl)propoxy]-2,4,6,8,10-tetra-t-butyldibenzo[d,f][1.3.2]dioxaphosphepin and the like.

Examples of the sulfur antioxidant include 2,4-bis[(octylthio)methyl]-O-cresol, 4,6-bis(dodecylthiomethyl)-O-cresol, dilauryl 3,3'-thiodipropionate, tridecyl-3,3'-thiodipropionate, dimyristyl-3,3'-thiodipropionate, distearyl 3,3'-thiodipropionate, lauryl stearyl 3,3'-thiodipropionate, neopentane tetrayl tetrakis(3-laurylthio propionate) and the like.

Two or more different sulfur antioxidants may be used in admixture.

Particularly preferably, dimyristyl-3,3'-thiodipropionate is mentioned.

Examples of the ultraviolet absorber include salicylate derivatives such as phenyl salicylate, 4-t-butylphenyl salicylate, 2,4-di-t-butylphenyl-3',5'-di-t-butyl-4'-hydroxybenzoate, 4-t-octylphenyl salicylate, bis(4-t-butylbenzoyl) resorcinol, benzoyl resorcinol, hexadecyl-3',5'-di-t-butyl-4'-hydroxybenzoate, octadecyl-3',5'-di-t-butyl-4'-hydroxybenzoate, 2-methyl-4,6-di-t-butylphenyl-3',5'-di-t-butyl-4'-hydroxybenzoate and mixtures thereof and the like,

2-hydroxybenzophenone derivatives such as 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone and mixtures thereof and the like,

2-(2'-hydroxyphenyl)benzotriazoles such as 2-(2-hydroxy-5-methylphenyl)benzotriazole, 2-(3',5'-di-t-butyl-2'-hydroxyphenyl)benzotriazole, 2-(2'-hydroxy-3'-t-butyl-5'-methylphenyl)-5-chlorobenzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-s-butyl-2'-hydroxy-5'-t-butylphenyl)benzotriazole, 2-(2'-hydroxy-4'-octyloxyphenyl)benzotriazole, 2-(3',5'-di-t-amyl-2'-hydroxyphenyl)benzotriazole, 2-[2'-hydroxy-3',5'-bis(α,α-dimethylbenzyl)phenyl]-2H-benzotriazole, 2-[(3'-t-butyl-2'-hydroxyphenyl)-5'-(2-octyloxycarbonylethyl)phenyl]-5-chlorobenzotriazole, 2-[3'-t-butyl-5'-[2-(2-ethylhexyloxy)carbonylethyl]-2'-hydroxyphenyl]-5-chlorobenzotriazole, 2-[3'-t-butyl-2'-hydroxy-5'-(2-methoxycarbonylethyl) phenyl]-5-chlorobenzotriazole, 2-[3'-t-butyl-2'-hydroxy-5'-(2-methoxycarbonylethyl)phenyl]benzotriazole, 2-[3'-t-butyl-2'-hydroxy-5-(2-octyloxycarbonylethyl)phenyl] benzotriazole, 2-[3'-t-butyl-2'-hydroxy-5'-[2-(2-ethylhexyloxy)carbonylethyl]phenyl] benzotriazole, 2-[2-hydroxy-3-(3,4,5,6-tetrahydrophthalimidemethyl)-5-methylphenyl]benzotriazole, 2-(3,5-di-t-butyl-2-hydroxyphenyl)-5-chlorobenzotriazole; mixture of 2-(3'-dodecyl-2'-hydroxy-5'-methylphenyl)benzotriazole and 2-[3'-t-butyl-2'-hydroxy-5'-(2-isooctyloxycarbonylethyl)phenyl] benzotriazole; 2,2'-methylenebis[6-(2H-benzotriazol-2-yl)-4-(1,1,3,3-tetramethylbutyl)phenol, 2,2'-methylenebis[4-t-butyl-6-(2H-benzotriazol-2-yl)phenol]; condensate of poly(3 to 11)(ethylene glycol) with 2-[3'-t-butyl-2'-hydroxy-5'-(2-methoxycarbonylethyl)phenyl]benzotriazole, condensate of poly(3 to 11)(ethylene glycol) with methyl 3-[3-(2H-benzotriazol-2-yl)-5-t-butyl-4-hydroxyphenyl] propionate; 2-ethylhexyl 3-[3-t-butyl-5-(5-chloro-2H-benzotriazol-2-yl)-4-hydroxyphenyl] propionate, octyl 3-[3-t-butyl-5-(5-chloro-2H-benzotriazol-2-yl)-4-hydroxyphenyl] propionate, methyl 3-[3-t-butyl-5-(5-chloro-2H-benzotriazol-2-yl)-4-hydroxyphenyl] propionate, 3-[3-t-butyl-5-(5-chloro-2H-benzotriazol-2-yl)-4-hydroxyphenyl]propionic acid and mixtures thereof, and the like.

Two or more different ultraviolet absorbers may be used in admixture.

Particularly preferably mentioned are 2-hydroxy-4-octoxybenzophenone, 2-(2-hydroxy-5-methyl-phenyl)benzotriazole, 2-(2'-hydroxy-3'-t-butyl-5'-methylphenyl)-5-chlorobenzotriazole, 2,4-di-t-butylphenyl-3,5-di-t-butyl-4-hydroxybenzoate and the like. Such ultraviolet absorbers may be used alone or two or more may be used in combination.

Examples of the photostabilizer include bis(2,2,6,6-tetramethyl-4-piperidyl) sebacate, bis((2,2,6,6-tetramethyl-4-piperidyl) succinate, bis(1,2,2,6,6-pentamethyl-4-piperidyl) sebacate, bis(N-octoxy-2,2,6,6-tetramethyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis(1,2,2,6,6-pentamethyl-4-piperidyl)2-(3,5-di-t-butyl-4-hydroxybenzyl)-2-butyl malonate, bis(1-acroyl-2,2,6,6-tetramethyl-4-piperidyl) 2,2-bis(3,5-di-t-butyl-4-hydroxybenzyl)-2-butyl malonate, bis(1,2,2,6,6-pentamethyl-4-piperidyl decane-dioate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethyl-piperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butane tetracarboxylate, tetrakis(1,2,2,6,6-pentamethyl-4-piperidyl)1,2,3,4-butane tetracarboxylate; mixed ester of 1,2,3,4-butane tetracarboxylic acid with 1,2,2,6,6-pentamethyl-4-piperidinol and 1-tridecanol,

mixed ester of 1,2,3,4-butanetetracarboxylic acid with 2,2,6,6-tetramethyl-4-piperidinol and 1-tridecanol, mixed ester of 1,2,3,4-butanetetracarboxylic acid with 1,2,2,6,6-pentamethyl-4-piperidinol and 3,9-bis(2-hydroxy-1,1-dimethylethyl)-2,4,8,10-tetraoxaspiro[5·5]undecane, mixed ester of 1,2,3,4-butanetetracarboxylic acid with 2,2,6,6-tetramethyl-4-piperidinol and 3,9-bis(2-hydroxy-1,1-dimethylethyl)-2,4,8,10-tetraoxaspiro[5·5]undecane; polycondensate of dimethyl succinate with 1-(2-hydroxyethyl)-4-hydroxy-2,2,6,6-tetramethyl-piperidine; poly[(6-morpholino-1,3,5-triazine-2,4-diyl)((2,2,6,6-tetramethyl-4-piperidyl)imino)hexamethylene((2,2,6,6-tetramethyl-4-piperidyl)imino)], poly[(6-(1,1,3,3-tetramethylbutyl)imino-1,3,5-triazine-2,4-diyl((2,2,6,6-tetramethyl-4-piperidyl)imino)hexamethylene((2,2,6,6-tetramethyl-4-piperidyl)imino)); polycondensate of N,N'-bis(2,2,6,6-tetramethyl-4-piperidyl)hexamethylenediamine with 1,2-dibromoethane; hindered amine photostabilizers such as N,N',4,7-tetrakis[4,6-bis(N-butyl-N-(2,2,6,6-tetramethyl-4-piperidyl) amino)-1,3,5-triazin-2-yl]-4,'7-diazadecane-1,10-diamine, N,N',4-tris[4,6-bis(N-butyl-N-(2,2,6,6-tetramethyl-4-piperidyl) amino)-1,3,5-triazin-2-yl]-4,7-diazadecane-1,10-diamine, N,N',4,7-tetrakis[4,6-bis(N-butyl-N-(1,2,2,6,6-pentamethyl-4-piperidyl)amino-)-1,3,5-triazin-2-yl]-4,7-diazadecane-1,10-diamine, N,N',4-tris[4,6-bis(N-butyl-N-(1,2,2,6,6-pentamethyl-4-piperidyl)amino)-1,3,5-triazin-2-yl]-4,7-diazadecane-1,10-diamine and mixtures thereof and the like; acrylate photostabilizers such as ethyl α-cyano-β,β-diphenyl acrylate, isooctyl α-cyano-β,β-diphenyl acrylate, methyl α-carbomethoxy cinnamate, methyl-α-cyano-β-methyl-p-methoxy cinnamate, butyl α-cyano-β-methyl-p-methoxy cinnamate, methyl α-carbomethoxy-p-methoxy cinnamate and N-(β-carbomethoxy-β-cyanovinyl)-2-methylindoline and mixtures thereof and the like,

nickel photostabilizers such as a nickel complex of 2,2'-thiobis-[4-(1,1,3,3-tetramethylbutyl)phenol], nickeldibutyldithiocarbamate, a nickel salt of a monoalkyl ester, a nickel complex of a ketoxime, and mixtures thereof and the like,

oxamide photostabilizers such as 4,4'-dioctyloxyoxanilide, 2,2'-diethoxyoxanilide, 2,2'-dioctyloxy-5,5'-di-t-butylanilide, 2,2'-didodecyloxy-5,5'-di-t-butylanilide, 2-ethoxy-2'-ethyloxanilide, N,N'-bis(3-dimethylaminopropyl)oxamide, 2-ethoxy-5-t-butyl-2'-ethoxyanilide, 2-ethoxy-5,4'-di-t-butyl-2'-ethyloxanilide and mixtures thereof and the like,

2-(2-hydroxyphenyl)-1,3,5-triazine photostabilizers such as 2,4,6-tris(2-hydroxy-4-octyloxyphenyl)-1,3,5-triazine, bis(2,2,6,6-tetramethyl-4-piperidyl) sebacate, poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], succinic acid dimethyl-1-(2-hydroxyethyl)-4-hydroxy-2,2,6,6-tetramethylpiperidine polycondensate (Tinuvin®622), 2-(2-hydroxy-4-octyloxyphenyl)-4,6-bis(2,4-dimethylphenyl)-1,3,5-triazine, 2-[2,4-dihydroxyphenyl-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl-phenyl)-1,3,5-triazine, 2-[2-hydroxy-4-(2-hydroxy-3-octyloxypropoxy)phenyl]-4,6-bis(2,4-dimethylphenyl)-1,3,5-triazine and mixtures thereof and the like.

Two or more different photostabilizers may be used in admixture.

Particularly preferably mentioned are bis(2,2,6,6-tetramethyl-4-piperidyl) sebacate, poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], succinic acid dimethyl-1-(2-hydroxyethyl)-4-hydroxy-2,2,6,6-tetramethylpiperidine polycondensate and the like.

Examples of the neutralizing agent include synthetic hydrotalcite, natural hydrotalcite, calcium hydroxide and the like. Examples of the lubricant include paraffin, polyethylene wax, stearic acid, butyl stearate, hardened castor oil, stearyl alcohol, calcium stearate and the like.

Examples of the antistatic agent include cationic antistatic agents such as primary amine salts, tertiary amine salts, quaternary amine salts, pyridine derivatives and the like; anionic antistatic agents such as sulfated oils, soaps, sulfated ester oils, sulfated amide oils, sulfated ester salts of olefin, fatty alcohol sulfate ester salts, alkylsulfate ester salts, fatty ethyl sulfonate salts, alkylnaphthalenesulfonate salts, alkylbenzenesulfonate salts, succinate ester sulfonate salts, phosphate ester salts and the like; nonionic antistatic agents such as partial fatty esters of polyhydric alcohols, ethylene oxide adducts of fatty alcohols, ethylene oxide adducts of fatty acids, ethylene oxide adducts of fatty amines or fatty amides, ethylene oxide adducts of alkylphenols, ethylene oxide adducts of partial fatty esters of polyhydric alcohols, polyethylene glycol and the like; ampholytic antistatic agents such as carboxylic acid derivatives, imidazoline derivatives and the like.

Examples of the anti-fogging agent include stearic monoglyceride, oleic monoglyceride, polyglycerin oleate, sorbitan monolaurate, sorbitan monostearate and the like.

Mentioned as the nucleating agent are 1,3,2,4-di-benzylidene sorbitol, 1,3,2,4-di-di-(p-methylbenzylidene) sorbitol, 1,3,2,4-di-(p-ethyl-benzylidene) sorbitol, 1,3,2,4-di-(2',4'-dimethyl-benzylidene) sorbitol, 1,3-p-chloro-benzylidene-2,4-p-methylbenzylidene sorbitol, 1,3,2,4-di-(p-propyl-benzylidene) sorbitol, aluminum-mono-hydroxydi-p-t-butyl benzoate, sodium-bis(4-t-butylphenyl) phosphate, sodium-2,2'-methylene-bis-(4,6-di-t-butylphenyl) phosphate, talc, sodium

benzoate, lithium-2,2'-methylene-bis-(4,6-di-t-butylphenyl) phosphate and the like.

Mentioned as the filler are oxides such as magnesium oxide, aluminum oxide, silicon oxide, calcium oxide, titanium oxide, chromium(III) oxide, iron oxide, zinc oxide, silica, diatomaceous earth, alumina fiber, antimony oxide, barium ferrite, strontium ferrite, beryllium oxide, pumice, pumice balloon and the like; basic substances or hydroxides such as magnesium hydroxide, aluminum hydroxide, basic magnesium carbonate and the like; carbonates such as magnesium carbonate, calcium carbonate, dolomite, dawsonite and the like; sulfates (sulfites) such as calcium sulfate, barium sulfate, ammonium sulfate, calcium sulfite, basic magnesium sulfate and the like; silicates such as sodium silicate, magnesium silicate, aluminum silicate, potassium silicate, calcium silicate, talc, clay, mica, asbestos, glass fiber, montmorillonite, glass balloon, glass bead, bentonite and the like; kaolin (potter's earth), pearlite, iron powder, copper powder, lead powder, aluminum powder, molybdenum sulfide, boron fiber, silicon carbide fiber, brass fiber, potassium titanate, lead titanate zirconate, zinc borate, aluminum borate, barium metaborate, calcium borate, sodium borate and the like.

Mentioned as the flame retardant are pentabromodiphenyl ether, octabromodiphenyl ether, decabromodiphenyl ether, tetrabromo bisphenol A, hexabromocyclododecane, triphenyl phosphate, red phosphorus, halogen-containing phosphate, aluminum hydroxide, magnesium hydroxide and the like. As an auxiliary agent for enhancing the flame retardancy of a halogen compound, antimony trioxide, antimony pentoxide and the like are listed.

As the additive to be contained in the polymer stabilizer, antioxidants are preferable and phenol antioxidants are more preferable.

Examples of a method for producing the polymer stabilizer of the present invention include a method of mixing the above-described compound (1) and the above-described additives using a mixer such as a Banbury mixer and the like, a method of further subjecting the mixture obtained in the above-described method to granulation by extrusion granulation, stirring granulation, compression granulation and the like, and other methods.

The polymer composition of the present invention contains the above-described polymer stabilizer and a polymer.

Examples of the polymer include thermoplastic polymers, thermosetting polymers, photo-curing polymers and the like, and thermoplastic polymers are preferable. The thermoplastic polymers will be described below.

Examples of the thermoplastic polymer include polyolefins [for example, propylene resins, ethylene resins (high density polyethylene (HD-PE), low density polyethylene (LD-PE), linear low density polyethylene (LLDPE), ethylene-ethyl acrylate copolymer, ethylene-vinyl acetate copolymer, ethylene-vinyl alcohol copolymer, ethylene-methyl methacrylate copolymer and the like), cyclic polyolefins, methyl pentene polymer], polystyrenes [poly(p-methylstyrene), poly ($\alpha$-methylstyrene), acrylonitrile-styrene copolymer, (special) acryl rubber-acrylonitrile-styrene copolymer, acrylonitrile-chlorinated polyethylene-styrene copolymer, and the like], chlorinated resins (for example, chlorinated polyethylene, polychloroprene, chlorinated rubber, polyvinyl chloride, polyvinylidene chloride), methacryl resin, fluororesin, polyacetal, grafted polyphenylene ether resin, polyphenylene sulfide resin, polyurethane, polyamide, polyester resins (for example, polyethylene terephthalate, polybutylene terephthalate, polylactic acid and the like), polycarbonate, polyacrylate, polysulfone, polyether ether ketone, polyether sulfone, aromatic polyester resin, diallyl phthalate prepolymer, silicone resin, polyisoprene, butadiene polymer and the like.

In particular, ethylene resins, propylene resins, polystyrenes and butadiene polymers are preferable, and propylene resins and butadiene polymers are more preferable.

Here, the butadiene polymer is a polymer containing a structural unit derived from butadiene, or a hydrogen-added substance of this polymer. Examples of such a butadiene polymer include styrene-butadiene copolymers such as a styrene-butadiene rubber (SBR), styrene-butadiene-styrene copolymer (SBS), styrene-butadiene block copolymer (SB) and the like, acrylonitrile-butadiene copolymer, acrylonitrile-butadiene-styrene-copolymer (ABS), polybutadiene and the like.

The butadiene polymer can be produced by a usual method such as a solution polymerization method, emulsion polymerization method, block polymerization method and the like. The butadiene polymer may be a resin or rubber. When the butadiene polymer is polybutadiene, it may be a polybutadiene rubber produced by a solution polymerization method or a polybutadiene rubber produced by an emulsion polymerization method.

Here, the propylene resin means a polyolefin containing a structural unit derived from propylene, and specifically mentioned are a crystalline propylene homopolymer, propylene-ethylene random copolymer, propylene-$\alpha$-olefin random copolymer, propylene-ethylene-$\alpha$-olefin copolymer; polypropylene block copolymer composed of a propylene homopolymer component or a copolymer component mainly composed of propylene, and a component of a copolymer of propylene and ethylene and/or $\alpha$-olefin.

In the present invention, when propylene resins are used as the thermoplastic polymer, the propylene resins may be used alone or two or more may be used in combination.

The $\alpha$-olefin is usually an $\alpha$-olefin having 4 to 12 carbon atoms, and examples thereof include 1-butene, 1-pentene, 1-hexene, 4-methyl-1-pentene, 1-octene, 1-decene and the like, and preferable are 1-butene, 1-hexene and 1-octene.

Examples of the propylene-$\alpha$-olefin random copolymer include a propylene-1-butene random copolymer, propylene-1-hexene random copolymer, propylene-1-octene random copolymer and the like.

Examples of the propylene-ethylene-a-olefin copolymer include a propylene-ethylene-1-butene copolymer, propylene-ethylene-1-hexene copolymer, propylene-ethylene-1-octene copolymer and the like.

In the polypropylene block copolymer composed of a propylene homopolymer component or a copolymer component mainly composed of propylene, and a component of a copolymer of propylene and ethylene and/or α-olefin, examples of the copolymer component mainly composed of propylene include a propylene-ethylene copolymer component, propylene-1-butene copolymer component, propylene-1-hexene copolymer component and the like, and examples of the component of a copolymer of propylene and ethylene and/or α-olefin include a propylene-ethylene copolymer component, propylene-ethylene-1-butene copolymer component, propylene-ethylene-1-hexene copolymer component, propylene-ethylene-1-octene copolymer component, propylene-1-butene copolymer component, propylene-1-hexene copolymer component, propylene-1-octene copolymer component, and the like. In an example of the component of a copolymer of propylene and ethylene and/or α-olefin, the content of ethylene and/or α-olefin having 4 to 12 carbon atoms is usually 0.01 to 20 wt%.

Examples of the polypropylene block copolymer composed of a propylene homopolymer component or a copolymer component mainly composed of propylene, and a component of a copolymer of propylene and ethylene and/or α-olefin include a propylene-ethylene block copolymer, (propylene)-(propylene-ethylene) block copolymer, (propylene)-(propylene-ethylene-1-butene) block copolymer, (propylene)-(propylene-ethylene-1-hexene) block copolymer, (propylene)-(propylene-1-butene) block copolymer, (propylene)-(propylene-1-hexene) block copolymer, (propylene-ethylene)-(propylene-ethylene-1-butene) block copolymer, (propylene-ethylene)-(propylene-ethylene-1-hexene) block copolymer, (propylene-ethylene)-(propylene-1-butene) block copolymer, (propylene-ethylene)-(propylene-1-hexene) block copolymer, (propylene-1-butene)-(propylene-ethylene) block copolymer, (propylene-1-butene)-(propylene-ethylene-1-butene) block copolymer, (propylene-1-butene)-(propylene-ethylene-1-hexene) block copolymer, (propylene-1-butene)-(propylene-1-butene) block copolymer, (propylene-1-butene)-(propylene-1-hexene) block copolymer, and the like.

When a propylene resin is used as the thermoplastic polymer in the present invention, preferable are polypropylene block copolymers composed of a crystalline propylene homopolymer, propylene homopolymer component or a copolymer component mainly composed of propylene, and a component of a copolymer of propylene and ethylene and/or α-olefin having 4 to 12 carbon atoms. More preferable are polypropylene block copolymers composed of a propylene homopolymer component or a copolymer component mainly composed of propylene, and a component of a copolymer of propylene and ethylene and/or α-olefin having 4 to 12 carbon atoms.

Example of preferable polymers include butadiene copolymer and the like. Examples of more preferable polymers include styrene-butadiene copolymer and the like, and examples of further preferable polymers include styrene-butadiene block copolymer and the like.

Regarding the method for producing the polymer composition of the present invention, examples of the case of production of a thermoplastic polymer composition include a method in which the above-described polymer stabilizer and thermoplastic polymer are mixed, then, melt-kneaded by a single-screw or multi-screw extruder, a method in which the above-described polymer stabilizer is previously dissolved or suspended in a solvent and the resultant solution is fed to a solution after polymerization of a thermoplastic polymer, then, the solvent is removed by a process such as evaporation, distillation and the like, and other methods.

When the polymer stabilizer is composed only of a compound (1) in the method for producing the polymer composition of the present invention, a method in which additives are blended separately from the polymer stabilizer is also exemplified. Specifically, a method in which pellets of a compound (1), additives and thermoplastic polymer are mixed by a Banbury mixer and the like, then, extrusion-molded to obtain a polymer composition in the form of pellet, and other methods, are mentioned.

Thus obtained polymer composition can be further molded to obtain a product such as a film, molding material, pipe and the like.

The polymer stabilizer in the polymer composition of the present invention is usually compounded so that the amount of a compound (1) contained in the polymer stabilizer is 0.0005 to 5 parts by weight, preferably 0.001 to 3 parts by weight with respect to 100 parts by weight of the polymer.

The polymer composition of the present invention is excellent in processing stability in that generation of a gel is suppressed even if it is kneaded at high temperatures, for example, temperatures of 250°C or higher. Excellent processing stability from the standpoint of suppression of generation of a gel can be evaluated by a fact that the time until reaching the maximum torque value of Laboplasto-Mill, so-called build-up time is longer.

The polymer composition of the present invention tends to be excellent in processing stability even after retention under high temperatures. Excellent processing stability after retention under high temperatures can be evaluated by a fact that when the melt flow rates (MFR) before and after retention under high temperatures, for example, 230°C are measured, the reduction ratio of MFR after retention is smaller.

The polymer composition containing the polymer stabilizer of the present invention is excellent in processing

stability, particularly, excellent in processing stability under high temperatures at which molding processing is carried out.

## EXAMPLES

The present invention will be described further in detail by the examples below.

### Example 1

To 100 parts by weight a styrene-butadiene block copolymer (Asaflex 830 manufactured by Asahi Kasei Corporation) were mixed 0.24 parts by weight of D-mannitol (Wako Pure Chemical Industries, Ltd.) as a polymer stabilizer, and the mixture was kneaded using Laboplasto-Mill (4C-150) manufactured by Toyo Seiki Co., Ltd. under conditions of 250°C and a revolution of 100 rpm in a nitrogen atmosphere, to obtain a polymer composition of the present invention.

#### Evaluation of processing stability

The kneading in Example 1 was continued, and the time until reaching the maximum torque value of the Laboplasto-Mill was measured as a build-up time. The build-up time was 105 minutes. In the case of the styrene-butadiene block copolymer, a longer build-up time means more excellent processing stability, thus, it is understood that the polymer composition composed of D-mannitol and styrene-butadiene block copolymer has excellent processing stability.

### Example 2

The same procedure as in Example 1 was carried out except that D-sorbitol (Wako Pure Chemical Industries, Ltd.) was used instead of D-mannitol as a polymer stabilizer, to obtain a polymer composition.

#### Evaluation of processing stability

The kneading in Example 2 was continued, and the build-up time was measured to find a time of 113 minutes. It is understood that the polymer composition composed of D-sorbitol and styrene-butadiene block copolymer has excellent processing stability.

### Comparative Example 1

#### Evaluation of processing stability

The same procedure as in Example 1 was carried out except that the polymer stabilizer was not used, and the build-up time was measured to find a time of 42 minutes.

### Processing stability after retention under high temperature

### Example 3

To 100 parts by weight a styrene-butadiene block copolymer (Asaflex 830 manufactured by Asahi Kasei Corporation) were dry-blended 0.6 parts by weight of D-mannitol as a polymer stabilizer, subsequently, the dry blend was passed through a hopper, and extruded using a 30 mmϕ single-screw extruder (DH-30-180, L/D28, manufactured by Tanabe Plastics Machinery Co., Ltd.) at 230°C and a screw revolution of 50 rpm, to obtain a polymer composition of the present invention in the form of pellets.

A cylinder of Melt Indexer (L217-E14011 manufactured by TechnoSeven Co., Ltd.) was heated at 230°C, the polymer composition of the present invention in the form of pellets was filled in this cylinder, then the MFR was measured immediately (without retention) under a load of 2.16 kg, to find a value of 20.1 (g/10 min).

Separately, the polymer composition of the present invention in the form of pellets was filled in this cylinder, then allowed to stay for 30 minutes, then the MFR was measured under a load of 2.16 kg, to find a value of 12.9 (g/10 min).

The reduction ratio of MFR was calculated according to the following formula:

reduction ratio (%) = (MFR value without retention - MFR value after 30 minutes retention)/MFR value without retention × 100

to find a value of 35.8%.

Smaller reduction ratio indicates more excellent processing stability after retention under high temperatures.

Example 4

The same procedure as in Example 3 was carried out except that D-mannitol was changed to D-sorbitol. The MFR value without retention was 19.7 (g/10 min) and the MFR value after 30 minutes retention was 11.3 (g/10 min), showing a reduction ratio of 42.6%.

Comparative Example 2

The same procedure as in Example 3 was carried out except that D-mannitol was not used. The MFR value without retention was 15.3 (g/10 min) and the MFR value after 30 minutes retention was 0.3 (g/10 min), showing a reduction ratio of 98.0%.

Industrial Applicability

The polymer composition containing the polymer stabilizer of the present invention is excellent in processing stability, particularly, excellent in processing stability under high temperatures at which molding processing is carried out.

## Claims

1. A polymer stabilizer comprising a compound of the formula (1):

$$C_nH_{2n}+_2O_n \qquad (1)$$

(wherein n represents an integer of 4 or more).

2. The polymer stabilizer according to Claim 1, wherein the compound of the formula (1) is a sugar alcohol having 6 carbon atoms.

3. A polymer composition comprising the polymer stabilizer as described in Claim 1 or 2 and a polymer.

4. The polymer composition according to Claim 3, wherein the polymer is at least one butadiene polymer selected from the group consisting of a styrene-butadiene rubber, styrene-butadiene-styrene copolymer, styrene-butadiene block copolymer, acrylonitrile-butadiene copolymer, acrylonitrile-butadiene-styrene copolymer and polybutadiene.

5. Use of a compound of the formula (1) as a polymer stabilizer:

$$C_nH_{2n}+_2O_n \qquad (1)$$

(wherein n represents an integer of 4 or more).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Genba de Yakudatsu Seikei Kako Gijutsu - Zairyo to Seikei Gijutsu. **Seiichi Homma ; 1. Kiso Sogo Kaisetsuhen.** PLASTIC. Kogyo Chosaka Publishing, Inc, April 2002